# EUROPEAN PATENT SPECIFICATION

(11) **EP 1 279 553 B1**
(45) Date of publication and mention of the grant of the patent: **05.09.2007**
(21) Application number: 02016013.1
(22) Date of filing: 18.07.2002
(51) Int. Cl.: B60N 2/235

(54) **Seat reclining device**
Neigungsverstellvorrichtung für einen Sitz
Dispositif d'inclinaison de siège

(30) Priority: 19.07.2001 JP 2001219310
(43) Date of publication of application: 29.01.2003
(73) Proprietor: AISIN SEIKI KABUSHIKI KAISHA, Kariya-shi, Aichi-ken (JP)
(72) Inventor: Moriyama, Genta, Anjo-shi, Aichi-ken (JP); Hoshihara, Naoaki, Obu-shi, Aichi-ken (JP)
(74) Representative: TBK-Patent

(56) References cited:
- FR-A- 2 258 817
- FR-A- 2 790 230
- US-A- 4 184 714
- US-A- 5 816 656

## Description

### FIELD OF THE INVENTION

This invention relates to a seat reclining device, and more particularly, the present invention pertains to a structure of the seat reclining device which is capable of receiving an excessive load.

### BACKGROUND OF THE INVENTION

FR-A-2790230 shows a seat reclining device having a first arm which is supported by one of a seat cushion or a seat back and a second arm which is supported rotatably by the first and which is supported by the other one of the seat cushion or a seat back. The device further comprises a first circular concave portion formed in the first arm, a second circular concave portion formed inside of the first concave portion and a pawl provided with a first outer gear portion having plural gear teeth. The first outer gear portion is engageable with a first inner gear portion having plural gear teeth formed on an inner peripheral portion of the first concave portion.

A seat reclining device which is capable of receiving an excessive load is disclosed in USP5,816,656. This known seat reclining device has a lower arm which is fixed to a seat cushion, an upper arm which is disposed in a seat back side and is capable of rotating with the lower arm, and a locking mechanism which restricts a rotation of the upper arm relative to the lower arm. In order to receive an excessive load, the device is improved with strength by combining a pair of reclining mechanisms which are structured with symmetrical shape with one another. This strengthened seat reclining device is utilized for supporting one side of the seat back where a seat belt is anchored. The seat reclining device supports an excessive load transmitted from the seat belt, upon an emergent occasion , such as a frontal collision of the vehicle.

However, the strength of the above reclining device is achieved by providing the lower arms, upper arms, and the locking mechanisms with pairs respectively. Accordingly, the number of parts increases and therefore, the manufacturing cost increases.

Therefore, a reclining seat which is improved with strength without increasing the number of parts is needed.

### SUMMARY OF THE INVENTION

According to one aspect of this invention, a seat reclining device comprises a first arm which is supported by one of a seat cushion or a seat back a second arm which is supported rotatably by the first arm and is supported by the other of the seat cushion or the seat back, a first circular concave portion formed in the first arm, a second circular concave portion formed inside of the first concave portion, a pawl provided with a first and a second outer gear portion having a plural gear teeth, a first inner gear portion having a plural gear teeth formed on an inner peripheral portion of the first circular concave portion, and being engageable with the first outer gear portion, and a second inner portion having a plural gear teeth formed on an inner peripheral portion of second circular concave portion, and being engageable with the second outer gear portion.

The seat reclining device which is structured as the above locks a position of the seat back relative to the seat cushion by engaging the first and the second engaging portions of the pawls with the first and the second engaged portions of the first arm.

### BRIEF DESCRIPTION OF THE DRAWINGS

The foregoing and additional features and characteristics of the present invention will become more apparent from the following detailed description considered with reference to the accompanying drawings in which like reference numerals designate like elements:
Fig. 1 is a plan view of a seat reclining device according to an embodiment of the invention partially cross-sectioned;
Fig. 2 is a cross-sectional view taken along the line II-II shown in Fig. 1;
Fig. 3 is a perspective view of a pawl of the seat reclining device according to one example of the invention;
Fig. 4 is a perspective view of a pawl of the seat reclining device according to another example of the invention;
Fig. 5 is a perspective view showing a back surface of the pawl shown in Fig. 3 or Fig. 4 of the seat reclining device;
Fig. 6 is an enlarged view of the portion shown as VI; and ,
Fig. 7 is a perspective view of a seat in which the seat reclining device with respect to this invention is mounted.

### DETAILED DESCRIPTION OF THE INVENTION

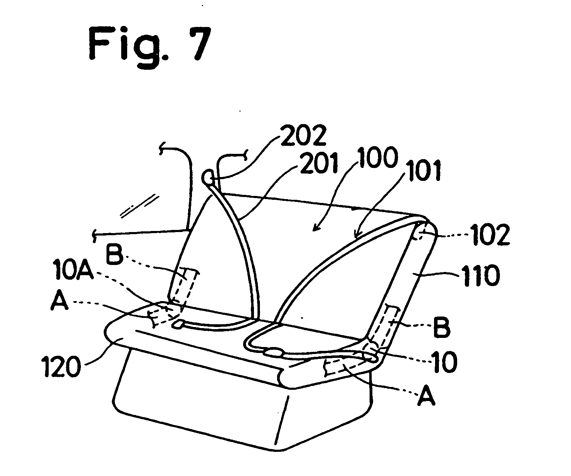

As shown in Fig. 7, a seat reclining device 10 which is improved with strength with respect to this invention is disposed in a left side in vehicle longitudinal direction of a seat 100 in which two or more passengers can sit on. The seat 100 has a seat back 110, a seat cushion 120, and seat belts 101 and 201. An end of the seat belt 101 is fixed by an installation portion 102 which is located in an upper part of the seat back 110, and the other seat belt 201 is fixed by an installation portion 202 such as a pillar portion of a body of a vehicle. With a seat which is structured by the above mechanism, upon an emergency such as a vehicle frontal collision occurs, a seat belt 101 side of the seat back 110 receives a greater load than a seat belt 201 side of the seat back 110 through the installation portion 102. Therefore, the seat reclining device 10 has to have enough strength. On the other hand, in the seat belt 201 side, a normal seat reclining device 10A is used because it does not receive the excessive load.

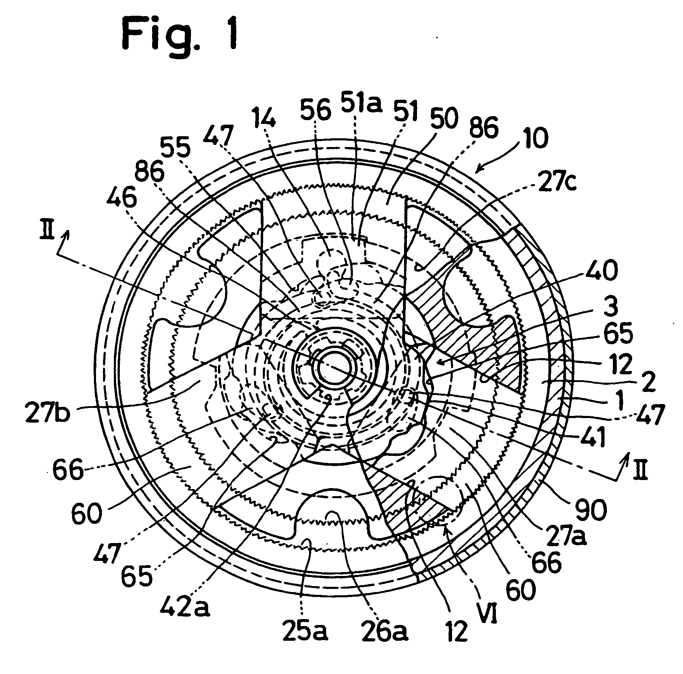

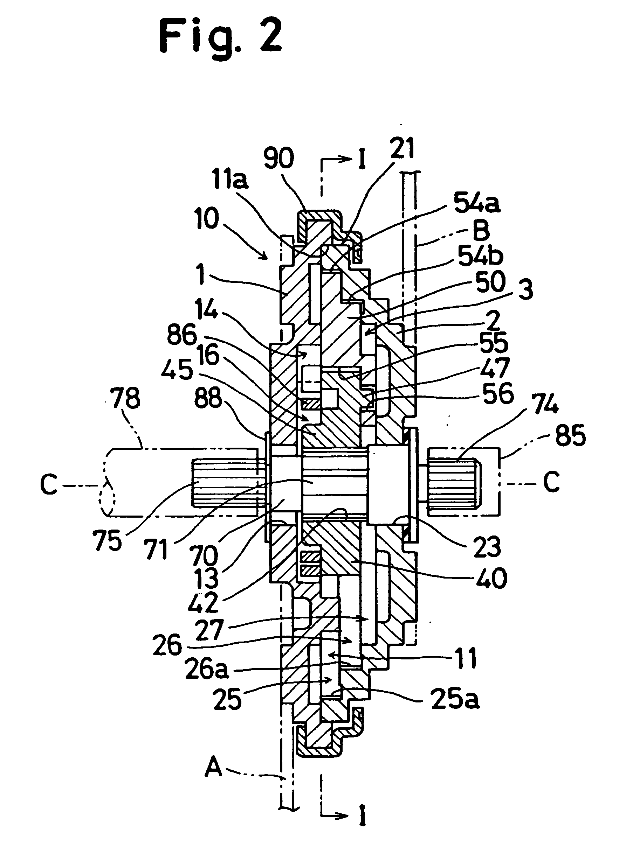

As shown in Fig 1 and Fig 2, the seat reclining device 10 has a lower arm 1 and an upper arm 2, both of which are round disc-shaped. The lower arm 1 is fixed to a seat cushion frame A by welding, and the upper arm 2 is fixed to a seat back frame B by welding. The lower arm 1 and the upper arm 2 are assembled opposingly and overlapping with each other.

In the lower arm 1, a concave portion 11 is formed by pressing a metal material in thickness direction, in other words, by a half die cutting method. The concave portion 11 is opening toward the upper arm 2 and has an inner peripheral surface 11a. The center of the inner peripheral surface 11a is a rotation axis C on which the upper arm 2 and the lower arm 1 rotate.

A circular outer peripheral surface 21 of the upper arm 2 is disposed sliding along the inner peripheral surface 11a, and the outer peripheral surface 21of the lower arm 1 and the inner peripheral surface 11a of the upper arm 2 function as a bearing shaft and a bearing respectively when they rotate mutually.

Furthermore, a holder 90 is disposed on the lower arm 1, covering an outer periphery of the upper arm 2, and an inner surface of the holder 90 is in contact with a side surface of the lower arm 1, supporting the lower arm 1. By the above mechanism, the upper arm 2 and the lower arm 1 are structured to rotate relatively with one another.

In the upper arm 2, a circular shaped concave portion 25 is formed by half die cutting. The concave portion 25 is opening toward the lower arm 1, and in the entire circumference of an inner peripheral portion of the concave portion 25, whose pivot is the rotation axis C, a first inner gear 25a (ie., a first engaged portion) is formed. Inside of the concave portion 25, a circular concave portion 26 is formed by half die cutting one step deeper than the concave 25. Furthermore, in the entire circumference of an inner peripheral portion of the concave portion 26, a second inner gear 26a (ie., a second engaged portion) is formed. The second inner gear 26a has gear teeth formed as having the same angular pitch with gear teeth of the first inner gear 25a, though the pitch circle diameter of the inner gear 26a is smaller than that of the first inner gear 25a. In addition, inside of the concave portion 26, a circular concave portion 27 is formed by half die cutting one step deeper than the concave portion 26. On an inner peripheral surface of the concave portion 27, a first stopper portion 27a and a second stopper portion 27b which are projecting toward the rotation axis C, and are formed with an angular intervals for defining a reclining angle range of the seat reclining device 10. Also, a projection portion 27c is formed between the first stopper portion 27a and the second stopper portion 27b. The concave portion 27c is formed lower than the first stopper 27a or the second stopper 27b.

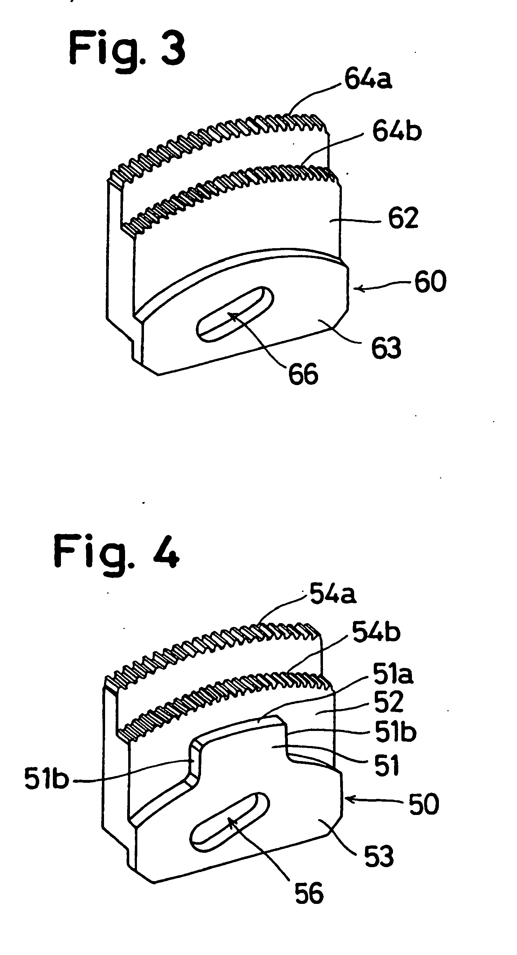

A locking mechanism 3 is disposed between the lower arm 1 and the upper arm 2. Three locking mechanisms 3 are disposed within a surface which is orthogonal with the rotation axis C, with equal angular intervals respectively, and the locking mechanisms 3 have two types of pawls 50 and 60, as shown in Fig. 3 and Fig. 4. The pawls 50 (ie., a first pawl) have projections 51 on side surfaces, and a shape of the pawl 60 (ie., a second pawl) is identical with a shape of the pawl 50 except that the pawl 60 does not have the projection 51. One of the pawl 50 type and two of the pawl 60 type are used in the locking mechanisms 3.

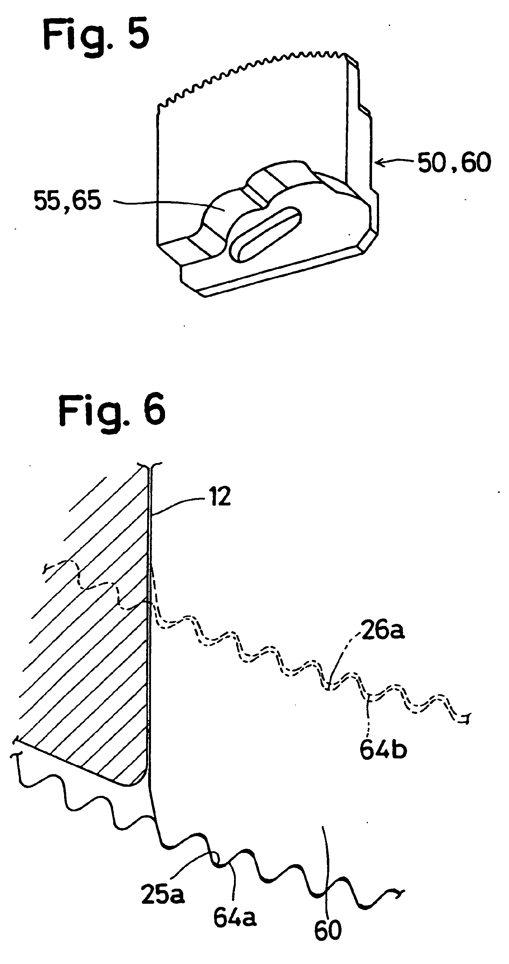

As shown in Fig. 3 and Fig. 4, each of the pawls 50 and 60 is made by a manufacturing method such as forging from plate-shaped steel material, and each of the first surface portions 52 and 62 and the second surface portions 53 and 63 are joined mutually with a step, and they are similar to rectangular in appearance. End surfaces of the first surface portions 52 and 62 are formed with two steps additionally, and in these end surfaces of the first surface portions 52 and 62, first outer gears 54a and 64a (ie., a first engaging portion), which are to be engaged with the first inner gear 25a of the upper arm 2, and second outer gears 54b and 64b (ie., a second engaging portion), which are to be engaged with the second inner gear 26a, are formed respectively. The angular pitch of teeth of the first outer gears 54a and 64a is same with that of the first outer gears 54b and 64b, though a pitch circle diameter of the second outer gears 54b and 64b is smaller than that of the first outer gears 54a and 64a. As shown in Fig 6, when the first inner gear 25a and the first outer gears 54a and 64a are engaged with one another, the second inner gear 26a and the second outer gears 54b and 64b are formed to ensure a slight clearance.

Also, as shown in Fig 1 and Fig 5, in the opposite sides of the pawls 50 and 60 shown in Fig 3 and Fig 4, cam surfaces 55, 65 are formed on the other end surfaces of the outer gears 54a, 54b and 64a, 64b. In other words, they are formed in backsides of the first surface portions 52 and 62 and the second surface portions 53 and 63. In the second surface portions 53 and 63, cam holes 56 and 66 are formed through the thickness of the pawls 50 and 60. As shown in Fig 3 and Fig 4, end surfaces of side widths of each pawl 50 and 60 are formed linearly, having a determined dimension in the vertical direction.

On the other hand, as shown in Fig.2, within the concave portion 11 of the lower arm 1, three pairs of guide walls 12 which are projecting and having intervals of about the same length as the side widths of the pawls 50 and 60 respectively are disposed. The pawls 50 and 60 are slidably disposed between the guide walls 12, and each pawl 50 and 60 is able to slide along the guide walls 12, and move away from or near to the rotation axis C.

As shown in Fig 1 and Fig 2, the locking mechanisms 3 have a cam 40 additionally.

The cam 40 has cam surfaces 41, and the cam surfaces 41 are disposed within the concave portions 25 and 26 of the upper arm 2, being able to rotate in accordance with the center of the rotation axis C. Three cam surfaces 41 are formed with the same angular intervals, and they are formed to be able to be in contact with the cam surfaces 55, 65 (Fig 5 and Fig 6) of each pawl 50 and 60. The cam surfaces 41 contact on each pawl 50 and 60 and press the first and the second outer gears 54a, 64a, 54b and 64b to be engaged with the first and second inner gears 25a, 26a by rotating in a counterclockwise direction from the position shown in Fig.1. On a side surface of the cam 40, projecting pins 47 which are disposed closer to the rotation axis C than each cam surface 41 are formed. The projecting pins 47 are inserted into the cam holes 56 and 66 of the pawls 50 and 60. The cam holes 56 and 66 are formed to function so as to make the first and the second outer gears 54a, 64a, 54b, and 64b of the pawls 50 and 60 can be disengaged from the first and the second inner gears 25a and 26a, when the cams 40 are rotated in a clockwise direction by the projecting pins 47 from the position shown in Fig 1.

As shown in Fig 1 and Fig 2, a hinge shaft 70 is disposed on the rotation axis C, and the hinge shaft 70 is inserted through inserting holes 13, 42, and 23 which are disposed in the lower arm 1, the cam 40, and the upper arm 2 respectively. At around the center of the axial direction of the hinge shaft 70, a spline 71 is formed with a plurality of grooves. The plurality of grooves which are opening toward an outer periphery of the hinge shaft 70, extending to a direction of the rotation axis C is formed on an outer surface of the hinge shaft 70. On the other hand, in an inner periphery of the inserting hole 42 of the cam 40, a female spline 42a which is engaged with the spline 71 of the hinge shaft 70 is formed, and the hinge shaft 70 and the cam 40 are structured to be rotated together. The hinge shaft 70 is fixed by a binding ring 88.

In addition, as shown in Fig 2, a serration 74 which has a plurality of teeth spaces extending in the axial direction is formed in an outer periphery of one end of the hinge shaft 70. An operational lever 85 which has a serration hole engaged with the serration 74 is fixedly attached on the hinge shaft 70. The cam 40 is disposed to be rotated by operating the operational lever 85. Furthermore, a serration 75 is disposed on the other end portion of the hinge shaft 70, and a connecting rod 78 is disposed in the serration 75. The connecting rod 78 is connected to the other hinge shaft of a reclining device 10A. By the above structure, the reclining device 10 and 10A can lock and unlock the seat back 110 simultaneously.

As shown in Fig 1 and Fig 2, in the lower arm 1, a circular concave portion 16 which is concentric with the concave portion 11 is formed by half die cutting one step deeper than the concave portion 11. A groove 14 extending outwardly in radial direction formed on an inner periphery surface of the circular concave portion 16 is formed. On the other hand, as shown in Fig 1, a groove 46 is formed on a boss portion 45 of the cam 40. One end of a spring 86 is hooked in a groove 14, and the other end is hooked in the groove 46. The spring 86 is spiral-shaped and the center of the spring 86 practically corresponds to the center of the rotation axis C. The spring 86 applies a force to rotate the cam 40 in the counterclockwise direction, and to press the cam surfaces 55, 65 of the pawls 50 and 60 through the cam surfaces 41 of the cam 40. Consequently, by pressing the cam surfaces 55, 65 , the spring 86 makes each of the outer gears 54a, 54b, 64a, and 64b be engaged with each of the inner gears 25a and 26a firmly.

The operation of the reclining device 10 which is structured as the above will now be described.

Fig 1 shows a condition in which the reclining device 10 is in a locked position. When the reclining device 10 is in a locked position, the cam 40 is in contact with the cam surfaces 55, 65 of the pawls 50, 60, and the pawls 50, 60 are pressed by the cam 40. As a result, the outer gears 54a, 54b, 64a, and 64b of the pawls 50, 60 are engaged with the inner gears 25a and 26a of the upper arm 2. Because of these engagements, rotations of the upper arm 2 and the lower arm 1 are restricted.

When the operational lever 85 is operated under this condition, from the position shown in Fig 1, the hinge shaft 70 is rotated together with the cam 40 in the clockwise direction, rotating against the spring force of the spring 86. The cam surfaces 41 are disengaged from the cam surfaces 55, 65 of the pawls 50, 60. At the same time, because the cam holes 56, 66 of the pawls 50, 60 are in contact with the projecting pins 47, the pawls 50, 60 are pulled toward the rotation axis C along the guide walls 12. Because the pawls 50, 60 are pulled toward the rotation axis C, the outer gears 54a, 54b, 64a, and 64b of the pawls 50 and 60 are disengaged from the inner gears 25a and 26a of the upper arm 2. Consequently, the reclining device 10 becomes in an unlocked condition. Also, the reclining device 10A connected with the reclining device 10 by the connecting rod 78 is also unlocked.

By the above mechanism, the seat back 110 which is supported by the seat back frame B relative to the seat cushion 120 which is supported by the seat cushion frame A can be adjusted to a required position.

When the reclining device 10 is unlocked and the seat back 110 is fallen in the forward direction with an angle which is deviated from the predetermined angle for a sitting position, the projection 27c formed in the inner peripheral surface of the concave portion 27 is rotated in the counterclockwise direction from the position shown in Fig 1, and enters between a projection 51 formed in the side surface of the pawl 50 and the inner gears 25a and 26a. Then, even when the operational lever is released while this condition, the outer gears 54a and 54b are not engaged with the inner gears 25a and 26a, because the projection 27c is engaged with the projection 51. While the projection 27c is engaged with the projection 51, the cam 40 is kept in an unlocked position by one of the projecting pins 47. Therefore, the other two pawls 60 which are operated by the cam 40 are also kept disengaged from the inner gears 25a and 26a. Within the angular range in which the projection 27c is formed, the seat back is not locked but rotated. Normally, a spring device which functions to fall the seat back 110 in the forward direction relative to the seat cushion is disposed, and within the angular range of the projection 27c, the seat back 110 rotates with a wide angular range at once so as to make an occupant get in and out for a back seat easily.

When the seat back is rotated in the forward direction completely, in other words, when the upper arm 2 is rotated mostly in the counterclockwise direction relative to the lower arm 1 from the position shown in Fig 1, the projection 51 of the pawl 50 is engaged with the first stopper 27a with a side surface 51b of the projection 51, and stops further rotation of the upper arm 2 relative to the lower arm 1.

When an occupant sits and replaces the position of the seat back to an appropriate position, the operational lever is operated, disengaging the pawls 50 and 60 from the inner gears 25a and 26a, and the seat back is raised.

In the inner peripheral surface of the concave portion 27 of the upper arm 2, other than the first stopper 27a which regulates the maximum angle when the seat back is rotated to a position in the forward direction completely, the second stopper 27b which regulates the maximum reclining angle when the seat back is rotated backward is also disposed. An operation mechanism is the same as when the first stopper 27a is operated; the projection 51 is engaged with the stopper 27b, and stops further rotation of the upper arm 2. As for the maximum reclining position in the backward direction, it is feasible to adjust the reclining device 10 to rotate with a wide angular range so that the seat back can be flat with the seat cushion.

As shown in the above, under a normal operation of the locking mechanism of the reclining device 10, because the locking mechanism 3 is structured that only the first inner gear 25a is engaged with the first outer gears 54a, 64a, there is no clearance between the first inner gear 25a and the first outer gears 54a, 64a. Therefore, the first engaging portion is not affected by vibration. However, when an emergency such as a frontal clash occurs, and the seat back receives an excessive load from the seat belt 101 in the forward direction, slight deformations of the first inner gear 25a and the first outer gears 54a, 64a occur. As a result, the slight clearance between the second inner gear 26a and the second outer gears 54b, 64b disappears and becomes to be engaged each another, and shares the excessive load with the first engaging portion.

According to the present invention, under a normal operation of a locking mechanism of a reclining device, by engaging a pair of outer gears of pawls with an inner gear of an upper arm, a firm locking which does not generate any abnormal noise or dysfunction by vibration and so on can be ensured. Furthermore, when an excessive load takes effect, strength of the reclining device can be improved by engaging another pair of outer gears of the pawls with an inner gear of an upper gear, sharing the excessive load with the first pair of the engaging portion.

By forming two outer gears on one pawl and two inner gears in the upper arm, the strength of the reclining device can be improved without increasing the number of parts.

Also, on an actual manufacturing process of the upper arm 2, by cutting off an outer portion of the upper arm 2 of the reclining device 10, the upper arm for the reclining device 10A which have one inner gear can be formed. Thus the same manufacturing stamping die is available for manufacturing another kind of reclining device which is mounted on the other side of the seat, then low cost can be achieved.

The seat reclining device is structured that a first circular shaped concave portion is formed in the first arm and a second concave portion which is concentric with the first concave portion is formed in an inner surface of the first concave portion respectively. The engaged portion is disposed by dividing into two engaged portions in which a first engaged portion is formed on an inner surface of the first concave portion and a second engaged portion is formed on an inner surface of the second concave portion. On the other hand, the engaging portion is divided into two engaging portions, in which a first engaging portion is engaged with the first engaged portion and a second engaging portion is engaged with the second engaged portion. All the engaging and engaged portion have gears which has the same angular piths each other.

## Claims

1. A seat reclining device (10) comprising
a first arm (1 or 2) which is supported by one of a seat cushion (A) or a seat back (B);
a second arm (1 or 2) which is supported rotatably by the first arm (1 or 2) and is supported by the other of the seat cushion or the seat back;
a first circular concave portion (25) formed in the first arm (1 or 2);
a second circular concave portion (26) formed inside of the first concave portion (25);
a pawl (50, 60) provided with a first (54a, 64a) and a second outer gear portion (54b, 64b) having a plural gear teeth; and
a first inner gear portion (25a) having a plural gear teeth formed on an inner peripheral portion of the first circular concave portion (25), and being engageable with the first outer gear portion (54a, 64a),
**characterized by**
a second inner portion (26a) having a plural gear teeth formed on an inner peripheral portion of the second circular concave portion (26), and being engageable with the second outer gear portion (54b, 64b).

2. A seat reclining device (10) according to claim 1, wherein the first outer gear portion (54a, 64a) engages with the first inner gear portion (25a) in contact each other, and the second outer gear portion (54b, 64b) engages with the second inner gear portion (26a) with a clearance which disappears upon an excessive load applied on the first or the second arm over a predetermined value.

3. A seat reclining device (10) according to claim 1, wherein all of the first and second outer gear portion (54a, 64a, 54b, 64b) and the first and second inner gear portion (25a, 26a) have a same angular gear pitch.

4. A seat reclining device according to claim 1, wherein the first inner gear portion (25a) and the second inner gear portion (26a) are formed in entire circumferences of the inner peripheral portions of the first and second concave portion (25, 26) respectively.

5. A seat reclining device according to claim 1, wherein the seat reclining device (10) is provided with a plural of the pawls (50, 60), and at least one of the pawls (50, 60) has a projection (51) on a side surface thereof, which in engageable with a lock control profile (27a, 27b, 27c) formed in an inner peripheral surface of a third circular concave portion (27) which is formed inside of the second circular concave portion (26).

## Patentansprüche

1. Sitzneigevorrichtung (10) mit
einem ersten Arm (1 oder 2), der durch ein Bauteil der Bauteile Sitzkissen (A) und Sitzlehne (B) abgestützt ist;
einem zweiten Arm (1 oder 2), der drehbar durch den ersten Arm (1 oder 2) abgestützt ist und durch das andere Bauteil der Bauteile Sitzkissen und Sitzlehne abgestützt ist;
einem ersten kreisförmigen konkaven Abschnitt (25), der in dem ersten Arm (1 oder 2) ausgebildet ist;
einem zweiten kreisförmigen konkaven Abschnitt (26), der im Inneren des ersten konkaven Abschnitts (25) ausgebildet ist;
einer Sperrklinke (50, 60), die mit einem ersten (54a, 64a) und einem zweiten äußeren Zahnradabschnitt (54b, 64b) versehen ist, die eine Mehrfachverzahnung haben; und
einem ersten inneren Zahnradabschnitt (25a), der eine Mehrfachverzahnung hat, die an einem Innenumfangsabschnitt des ersten kreisförmigen konkaven Abschnitts (25) ausgebildet ist, und die mit dem ersten äußeren Zahnradabschnitt (54a, 64a) eingreifen kann,
**gekennzeichnet, durch**
einen zweiten inneren Abschnitt (26a), der eine Mehrfachverzahnung hat, die an einem Innenumfangsabschnitt des zweiten kreisförmigen konkaven Abschnitts (26) ausgebildet ist, und die mit dem zweiten äußeren Zahnradabschnitt (54b 64b) eingreifen kann.

2. Sitzneigevorrichtung (10) gemäß Anspruch 1, wobei der erste äußere Zahnradabschnitt (54a, 64a) mit dem ersten inneren Zahnradabschnitt (25a) in gegenseitigem Kontakt eingreift, und der zweite äußere Zahnradabschnitt (54b, 64b) mit dem zweiten inneren Zahnradabschnitt (26a) mit einem Spalt eingreift, der bei einer übermäßigen Last über einen vorbestimmten Wert, die auf den ersten oder den zweiten Arm aufgebracht wird, verschwindet.

3. Sitzneigevorrichtung (10) gemäß Anspruch 1, wobei alle von dem ersten und dem zweiten äußeren Zahnradabschnitt (54a, 64a, 54b, 64b) und dem ersten und dem zweiten inneren Zahnradabschnitt (25a, 26a) einen selben Zahnradteilungswinkel haben.

4. Sitzneigevorrichtung gemäß Anspruch 1, wobei der erste innere Zahnradabschnitt (25a) und der zweite innere Zahnradabschnitt (26a) in gesamten Umfängen der inneren Umfangsabschnitte des ersten bzw. zweiten konkaven Abschnitts (25, 26) ausgebildet sind.

5. Sitzneigevorrichtung gemäß Anspruch 1, wobei die Sitzneigevorrichtung (10) mit einer Vielzahl der Sperrklinken (50, 60) versehen ist, und wenigstens eine der Sperrklinken (50, 60) einen Vorsprung (51) an einer Seitenfläche von sich hat, der mit einem Sperrsteuerprofil (27a, 27b, 27c) eingreifen kann, das in einer Innenumfangsfläche eines dritten kreisförmigen konkaven Abschnitts (27) ausgebildet ist, der im Inneren des zweiten kreisförmigen konkaven Abschnitts (26) ausgebildet ist.

## Revendications

1. Dispositif d'inclinaison de siège (10) comprenant
un premier bras (1 ou 2) qui est supporté par l'un d'un coussin de siège (A) ou d'un dossier de siège (B);
un deuxième bras (1 ou 2) qui est supporté de manière rotative par le premier bras (1 ou 2) et est supporté par l'autre du coussin de siège ou du dossier de siège;
une première portion concave circulaire (25) formée dans le premier bras (1 ou 2);
une deuxième portion concave circulaire (26) formée à l'intérieur de la première portion concave (25);
un cliquet (50, 60) doté d'une première (54a, 64a) et d'une deuxième portion d'engrenage externe (54b, 64b) ayant une pluralité de dents d'engrenage; et
une première portion d'engrenage interne (25a) ayant une pluralité de dents d'engrenage formées sur une portion périphérique interne de la première portion concave circulaire (25), et étant engageable avec la première portion d'engrenage externe (54a, 64a),
**caractérisé par**
une deuxième portion interne (26a) ayant une pluralité de dents d'engrenage formées sur une portion périphérique interne de la deuxième portion concave circulaire (26), et étant engageable avec la deuxième portion d'engrenage externe (54b, 64b).

2. Dispositif d'inclinaison de siège (10) selon la revendication 1, dans lequel la première portion d'engrenage externe (54a, 64a) s'engage avec la première portion d'engrenage interne (25a) en contact l'une avec l'autre, et la deuxième portion d'engrenage externe (54b, 64b) s'engage avec la deuxième portion d'engrenage interne (26a) avec un jeu qui disparaît lorsqu'une charge excessive appliquée sur le premier et le deuxième bras dépasse une valeur prédéterminée.

3. Dispositif d'inclinaison de siège (10) selon la revendication 1, dans lequel l'ensemble de la première et de la deuxième portions d'engrenages externes (54a, 64a, 54b, 64b) et la première et la deuxième portions d'engrenages internes (25a, 26a) ont un même pas d'engrenage angulaire.

4. Dispositif d'inclinaison de siège selon la revendication 1, dans lequel la première portion d'engrenage interne (25a) et la deuxième portion d'engrenage interne (26a) sont formées dans des circonférences entières des portions périphériques internes de la première et de la deuxième portions concaves (25, 26) respectivement.

5. Dispositif d'inclinaison de siège selon la revendication 1, dans lequel le dispositif d'inclinaison de siège (10) est doté d'une pluralité de cliquets (50, 60), et au moins l'un des cliquets (50, 60) a une projection (51) sur une surface latérale de celui-ci, qui est engageable avec un profil de commande de verrouillage (27a, 27b, 27c) formé dans une surface périphérique interne d'une troisième portion concave circulaire (27) qui est formée à l'intérieur de la deuxième portion concave circulaire (26).
